# EUROPÄISCHE PATENTSCHRIFT

(11) **EP 0 463 436 B1**
(45) Veröffentlichungstag und Bekanntmachung des Hinweises auf die Patenterteilung: **02.08.1995**
(21) Anmeldenummer: 91109401.9
(22) Anmeldetag: 08.06.1991
(51) Int. Cl.: B60N 2/42

(54) **Fahrzeugsitz**
Vehicle seat
Siège de véhicule

(30) Priorität: 23.06.1990 DE 4020057
(43) Veröffentlichungstag der Anmeldung: 02.01.1992
(73) Patentinhaber: BAYER AG, 51368 Leverkusen (DE)
(72) Erfinder: Rink, Manfred, Dipl.-Ing., W-5000 Köln 60 (DE); Lehnert, Günther, Dr., W-5090 Leverkusen 1 (DE)

(56) Entgegenhaltungen:
- EP-A- 0 372 337
- DE-A- 3 706 394
- DE-A- 3 714 588
- FR-A- 2 375 068
- US-A- 3 501 200
- US-A- 4 688 662

## Beschreibung

Die Erfindung betrifft einen Fahrzeugsitz, bestehend aus einem Sitzunterteil und einer Rückenlehne, welche miteinander mittels Gelenkbeschlägen verbunden sind, wobei die Gelenkbeschläge Laschen aufweisen und jede Lasche mit zwei in Längsausdehnung der Lasche mit Abstand angeordneten Durchstecklöchern versehen ist, durch welche Verbindungsbolzen hindurchgeführt und im Sitzunterteil bzw. in der Rückenlehne gehalten sind.

Fahrzeugsitze für Straßenfahrzeuge, schnelle Schienenfahrzeuge, Boote und Flugzeuge müssen so konstruiert sein, daß bei Aufprallunfällen die Fahrzeugsitze die einwirkenden Kräfte absorbieren, um die Insassen zu schützen. Bei derartigen Aufprallunfällen sind die Rückenlehne, das Sitzunterteil und die die Rückenlehne und das Sitzunterteil verbindenden Gelenkbeschläge und insbesondere die Krafteinleitungsstellen an den Verbindungen besonders starken Belastungen ausgesetzt. Die Verbindung zwischen den Laschen, Gelenkbeschlägen und dem Sitzunterteil bzw. Rückenlehne erfolgt in der Regel über Verbindungsbolzen, wie Schraubbolzen oder Gewindestifte. Solche Fahrzeugsitze sind heute ausnahmslos mit Gelenkbeschlägen ausgestattet, weil starre Rückenlehnen vom Käufer nur noch für Fondsitze akzeptiert werden. In diesem Falle ist eine besonders gute Verankerung der Rückenlehnen möglich, so daß hier keine zusätzlichen Sicherheitsmaßnahmen getroffen worden müssen. Bei Fahrzeugsitzen mit freistehender Rückenlehne, d.h. solchen, die lediglich über die Beschläge gehalten sind, neigen die Laschen dieser Beschläge dazu, unter der Krafteinwirkung auszubeulen, wobei sich automatisch eine Verkürzung des Abstandes der beiden Befestigungspunkte ergibt. Dieses ist insbesonders dann der Fall, wenn die Laschen mit Sollverformungsstellen zur besseren Absorption der einwirkenden Kräfte ausgestattet sind. Aus der Europäischen Offenlegungsschrift EP-A-0 372 337 ist ein dem Oberbegriff des Hauptanspruchs entsprechender Fahrzeugsitz bekannt, der die genannten Sollverformungsstellen an den Metallbeschlägen aufweist, die die Rückenlehne und das Sitzunterteil miteinander verbinden und bei Überlastung auf Bruch eher ansprechen als die Rückenlehne. Bei starken Krafteinwirkungen können die Fixierungspunkte der Verbindungsstellen im Sitzunterteil bzw. in der Rückenlehne ausbrechen, wodurch Verletzungsgefahr für die Insassen besteht.

Es besteht die Aufgabe, bei Fahrzeugsitzen der eingangs genannten Art durch einen günstigen Kraftwegverlauf bei der Verformung der Laschen der Beschläge infolge Aufprallbelastungen den Überlastschutz zu verbessern.

Gelöst wird diese Aufgabe dadurch, daß zwischen mindestens einer Lasche und dem Sitzunterteil bzw. der Rückenlehne mittels der Verbindungsbolzen eine Fixpunktverbindung und eine Gleitverbindung bestehen.

Auf diese Weise wird erreicht, daß infolge der Gleitverbindung die Verbindungsbolzen bzw. deren Fixierungsstellen in Sitzunterteil und/oder Rückenlehne nicht noch zusätzlich in Abstand verkürzender Weise beansprucht werden. Das heißt, beim Ausbeulen der Lasche bleibt der Abstand der Verbindungsbolzen dank der Gleitverbindung erhalten. Dadurch wird die Gefahr des Ausbrechens eliminiert. Es versteht sich, daß anstelle von zwei Verbindungsbolzen je Lasche auch deren mehrere vorhanden sein können; sie müssen jedoch auf eine Gleitverbindung und eine Fixpunktverbindung aufgeteilt sein.

Im Normalfall wird man die Gleitverbindung der Rückenlehnenbefestigung zuordnen, während die Befestigung des Sitzunterteils aus zwei Festpunktverbindungen besteht. Im Spezialfalle kann aber auch die umgekehrte Anordnung von Vorteil sein.

Eine besonders bevorzugte und einfach zu realisierende Ausführungsform ist dadurch gekennzeichnet, daß die Gleitverbindung aus einem als Langloch ausgebildeten Durchsteckloch besteht und beide Verbindungsbolzen fest im Sitzunterteil bzw. in der Rückenlehne gehalten sind.

Als Inversion hierzu besteht die Gleitverbindung aus einer im Sitzunterteil bzw. in der Rückenlehne angeordneten Gleitführung für einen mit dem Verbindungsbolzen verbundenen Gleitstein. Die zweite Ausführungsform ist etwas aufwendiger aber nichtsdestoweniger realisierbar. Sofern der Rahmen des Sitzunterteils bzw. der Rückenlehne aus spritzgegossenem Kunststoff besteht, kann eine solche Gleitführung direkt eingeformt sein.

Kommt es allerdings im Extremfalle einer außerordentlich hohen Belastung zum Bruch der Gleitführung, dann muß der gesamte Rahmen ausgetauscht werden. Deshalb ist eine Montage einer austauschbaren Gleitführung, insbesondere wenn diese aus Metall besteht, vorteilhafter. Denn eine derart ausgebildete Gleitführung kann so konzipiert sein, daß sie sich bei Überschreiten einer gewissen Kraft aus Sicherheitsgründen zusätzlich verformt, und zwar in gewünschter Weise. In diesem Falle wäre dann nur die Gleitführung auszutauschen, wenn sie sich beispielsweise durch Schrauben leicht befestigen läßt.

Gemäß einer bevorzugten Ausführungsform besitzt der Verbindungsbolzen einen als Gleitstein ausgebildeten Kopf.

In einfachster Weise verwendet man hierfür eine Schraube mit Kopf, wobei die Breite der Gleitführung auf die Breite des Schraubenkopfes abgestimmt ist. Die Gleitbahn der Gleitführung besitzt vorzugsweise T-förmigen Querschnitt, wobei nicht alle Umfangsflächen als Gleitflächen ausgebildet sein müssen.

Bei der Ausführung mit Langloch ist es wichtig, daß beim Ausbeulen der Lasche die Führung des Verbindungsbolzens im Langloch erhalten bleibt, d.h. die äußere Abdeckung des Langloches durch den Kopf bzw. die Mutter des Verbindungsbolzens gegebenenfalls unter Zuhilfenahme einer Beilagscheibe muß genügend groß sein. Besondere Gestaltungsweisen der Gleitverbindung ermöglichen eine weitgehende Einflußnahme auf den Kraft-Wegverlauf während der Einwirkungszeit.

Im Normalfall erstreckt sich das Langloch bzw. die Gleitführung in der Ebene der beiden Verbindungen. Durch Anordnung unter einem Winkel zur Ebene, in der die Verbindungen liegen, oder in Form einer Kurve läßt sich bereits ein gewünschter Dämpfungseffekt erzielen. Dabei wird zusätzlich erreicht, daß bei Zuordnung der Gleitverbindung zur Rückenlehne diese in gewünschter Weise bei Krafteinwirkung ihren Neigungswinkel ändert.

Eine weitere Möglichkeit der Einflußnahme besteht darin, daß das Langloch bzw. die Gleitführung eine Konturierung aufweist.

Eine solche Konturierung besteht beispielsweise darin, daß Langloch bzw. Gleitführung sich entgegen der Krafteinwirkungsrichtung verengen. Dazwischen können wieder Erweiterungen vorgesehen sein.

Gemäß einer weiteren Einflußnahmemöglichkeit weist die Lasche im Bereich des Langloches bzw. die Wandung der Gleitführung eine Profilierung auf.

Durch die Art der Profilierung läßt sich der Kraft-Wegverlauf ebenfalls günstig beeinflussen. Die Profilierung der Lasche hat dabei eine Versteifungsfunktion, um die Verformung zu steuern, oder sie dient durch keilförmige Verdickung der Lasche, bzw. Verengung der Gleitführung, der Dämpfung der Gleitbewegung, indem im ersten Fall der Kopf bzw. die Mutter des Verbindungsbolzens auf dieser keilförmig ansteigenden Erhebung aufläuft und im zweiten Falle läuft der Gleitstein auf. Für den Wirkungsgrad spielt der Keilwinkel ebenso eine Rolle wie die elastische Verformbarkeit der Lasche bzw. die Wandung der Gleitführung.

Als weitere Variante ist in einem Langloch eine auf dem zugeordneten Verbindungsbolzen angeordnetes Aufweitstück geführt, bzw. der Gleitstein ist als Aufweitstück ausgebildet.

Dabei ist natürlich Voraussetzung, daß sich das Langloch bzw. die Gleitführung, in Belastungsrichtung durch das Aufweitstück verengt.

Insbesondere bei Sitzunterteil- bzw. Rückenlehnenrahmen aus Kunststoff oder in Metalleichtbauweise bei Langlochausführung in der Lasche ist es vorteilhaft, den Befestigungsstellen der Verbindungsbolzen im Sitzunterteil bzw. in der Rückenlehne eine vorzugsweise eine Versteifungssicke aufweisende Entlastungsplatte zuzuordnen, durch welche die Verbindungsbolzen hindurchreichen.

Eine weitere Variante ist dadurch gekennzeichnet, daß im Langloch ein hartelastischer Puffer angeordnet ist.

Ein solcher Puffer besteht beispielsweise aus einem Polyurethanelastomer geeigneter Härteeinstellung. Er kann auch aus Schichten verschiedener Härte bestehen.

Die neuartige Konstruktion ist in besonders vorteilhafter Weise für Fahrzeugsitze anwendbar, welche Beschläge mit Sollverformungsstellen an den Laschen aufweisen, weil hier ein Ausbeulen der Laschen bei entsprechender Krafteinwirkung programmiert ist. Besonders vorteilhaft ist, daß im Ernstfall in der Regel weder die Rückenlehne noch das Sitzunterteil zerstört werden. Es bedarf deshalb nach einer solchen Krafteinwirkung nur des Austausches der Beschläge, oder sofern diese entsprechend konstruiert sind, sogar nur der verformten Laschen.

In der Zeichnung ist der neue Fahrzeugsitz im Abriß in mehreren Ausführungsbeispielen rein schematisch dargestellt und nachstehend näher erläutert. Es zeigen:
- Fig. 1: einen Abriß eines ersten Ausführungsbeispieles des Fahrzeugsitzes in Explosionsdarstellung,
- Fig. 2 bis 6: verschiedene Ausführungsformen von Langloch und Profilierung der Lasche,
- Fig. 7: einen Abriß eines Fahrzeugsitzes gemäß einem zweiten Ausführungsbeispiel in Explosionsdarstellung und
- Fig. 8 bis 11: verschiedene Ausführungen von Gleitführungen und deren Profilierung.

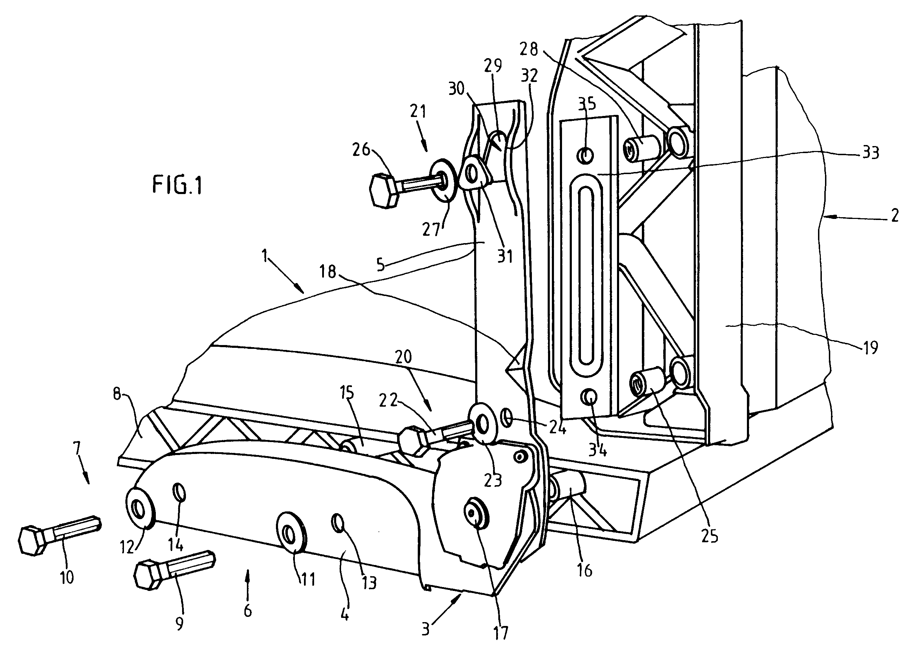

In Fig. 1 besteht der Fahrzeugsitz aus einem Sitzunterteil 1 und einer Rückenlehne 2. Beide sind mittels Gelenkbeschlägen 3 (nur einer sichtbar) miteinander verbunden. Der Gelenkbeschlag 3 ist mit zwei Laschen 4, 5 versehen, von denen die Lasche 4 dem Sitzunterteil 1 und die Lasche 5 der Rückenlehne 2 zugeordnet sind. Die Lasche 4 ist mittels zwei Fixpunktverbindungen 6, 7 mit dem Rahmen 8 des Sitzunterteils 1 verbunden. Die Fixpunktverbindungen 6, 7 bestehen aus Verbindungsbolzen (Schrauben) 9, 10, auf denen Beilagscheiben 11, 12 sitzen und welche durch in der Lasche 4 angeordnete Löcher 13, 14 geführt sind und im Rahmen 8 in Gewindehülsen 15, 16 eingreifen. Das Gelenk ist mit 17 bezeichnet. Die Lasche 5 weist eine Sollverformungsstelle 18 in Form einer Sicke auf und bildet mit dem Rahmen 19 der Rückenlehne 2 eine Fixpunktverbindung 20 und eine Gleitverbindung 21. Die Fixpunktverbindung 20 besteht aus einem Verbindungsbolzen (Schraube) 22 mit Beilagscheibe 23, einem Schraubenloch 24 in der Lasche 5 und einer im Rahmen 19 angegossenen Gewindehülse 25, in welche der Verbindungsbolzen 22 eingreift. Die Gleitverbindung 21 besteht ebenfalls aus einem Verbindungsbolzen 26 mit Beilagscheibe 27 und einer im Rahmen 19 eingegossenen Gewindehülse 28 für den Verbindungsbolzen 26. Die Gleitverbindung 21 ist dadurch gegeben, daß hier anstelle eines einfachen, auf den Durchmesser des Verbindungsbolzens 26 abgestimmten Loches in der Lasche 5 ein Langloch 29 vorgesehen ist. Dieses weist eine Dreieckskontur 30 auf, in welche ein entsprechend geformtes Aufweitstück 31 eingreift. Im Bereich des Langloches 29 weist die Lasche 5 eine versteifende Profilierung 32 auf. Zwischen der Lasche 5 und dem Rahmen 19 ist eine gesickte Entlastungsplatte 33, welche entsprechende Schraubenlöcher 34, 35 aufweist, vorgesehen.

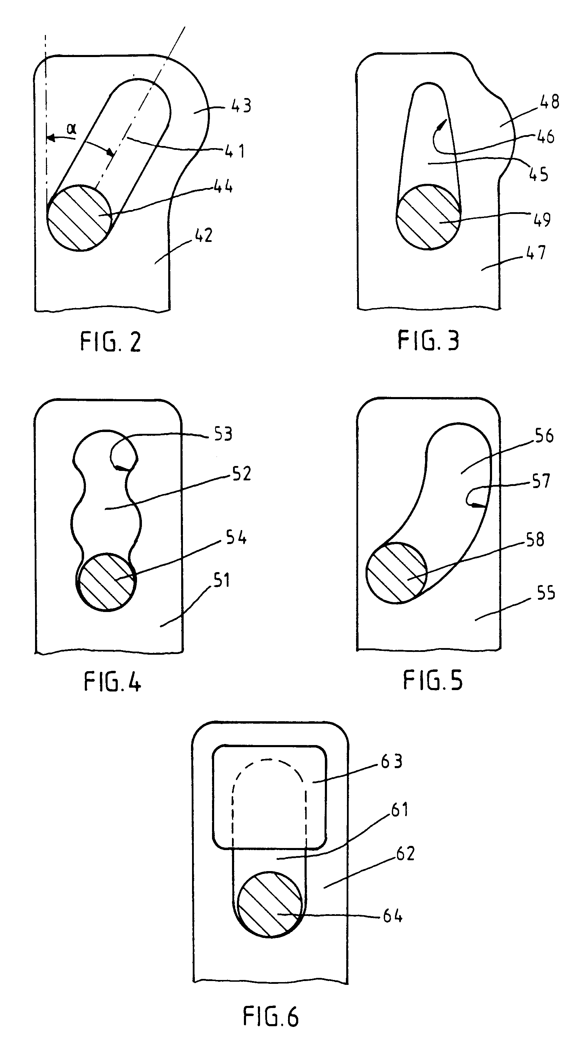

In Fig. 2 weist das Langloch 41 gleichbleibende Breite auf und ist unter einem Winkel α von 15° zur Längsrichtung der Lasche 42 geneigt. Letztere weist eine versteifende Profilierung 43 auf. Der Verbindungsbolzen ist mit 44 bezeichnet.

In Fig. 3 ist das Langloch 45 mit einer sich verjüngenden Kontur 46 und die Lasche 47 mit einer Verstärkungsprofilierung 48 versehen. Der Verbindungsbolzen ist mit 49 bezeichnet.

In Fig. 4 besitzt das in der Lasche 51 angeordnete Langloch 52 eine sinuskurvenartige Begrenzungskontur 53. Dementsprechend ist die Breite dieses Langloches 52 stellenweise geringer als der Durchmesser des Verbindungsbolzens 54.

Gemäß Fig. 5 besitzt das in der Lasche 55 angeordnete Langloch 56 eine bogenartige Kontur 57. Der Verbindungsbolzen ist mit 58 bezeichnet.

Gemäß Fig. 6 ist im Langloch 61 der Lasche 62 ein hartelastischer Puffer 63 aus Polyurethanelastomer angeordnet. Der Verbindungsbolzen ist mit 64 bezeichnet.

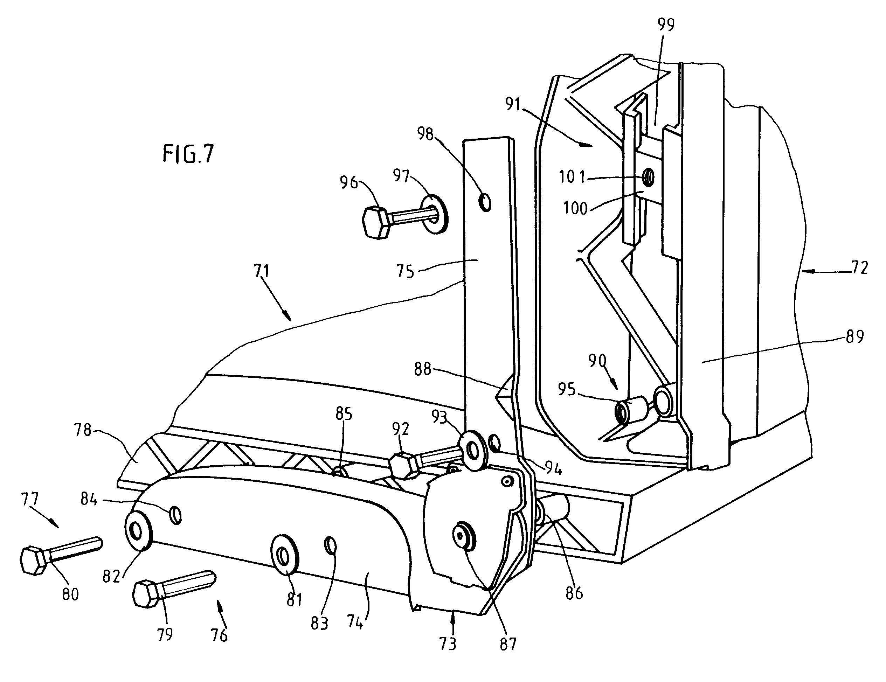

In Fig. 7 besteht der Fahrzeugsitz aus einem Sitzunterteil 71 und einer Rückenlehne 72. Beide sind mittels Gelenkbeschlägen 73 (nur einer ist sichtbar) miteinander verbunden. Der Gelenkbeschlag 73 ist mit zwei Laschen 74, 75 versehen, von denen die Lasche 74 dem Sitzunterteil 71 und die Lasche 75 der Rückenlehne 72 zugeordnet sind. Die Lasche 74 ist mittels zwei Fixpunktverbindungen 76, 77 mit dem Rahmen 78 des Sitzunterteils 71 verbunden. Die Fixpunktverbindungen 76, 77 bestehen aus Verbindungsbolzen (Schrauben) 79, 80, auf denen Beilagscheiben 81, 82 sitzen und welche durch in der Lasche 74 angeordnete Löcher 83, 84 geführt sind und im Rahmen 78 in Gewindehülsen 85, 86 eingreifen. Das Gelenk ist mit 87 bezeichnet. Die Lasche 75 weist eine Sollverformungsstelle 88 in Form einer Sicke auf und bildet mit dem Rahmen 89 der Rückenlehne 72 eine Fixpunktverbindung 90 und eine Gleitverbindung 91. Die Fixpunktverbindung 90 besteht aus einem Verbindungsbolzen (Schraube) 92 mit Beilagscheibe 93, einem Schraubenloch 94 in der Lasche 75 und einer im Rahmen 89 eingegossenen Gewindehülse 95, in welche der Verbindungsbolzen 92 eingreift. Die Gleitverbindung 91 besteht ebenfalls aus einem Verbindungsbolzen 96 mit Beilagscheibe 97, einem Schraubenloch 98 in der Lasche 75. Die Gleitverbindung 91 ist dadurch gegeben, daß im Rahmen 89 anstelle einer einfachen Gewindehülse eine Gleitführung 99 für einen mit einem Gewindeloch 101 versehenem Gleitstein 100 vorgesehen ist. Diese Gleitführung 99 mit Gleitstein 100 hat die Funktion, daß sich beim Ausbeulen der Lasche 75 der Abstand zwischen Fixpunktverbindung 90 und Gleitverbindung 91 verkürzen kann, ohne daß die Verbindungsbolzen 92 und 96 aus der Rückenlehne 72 ausbrechen.

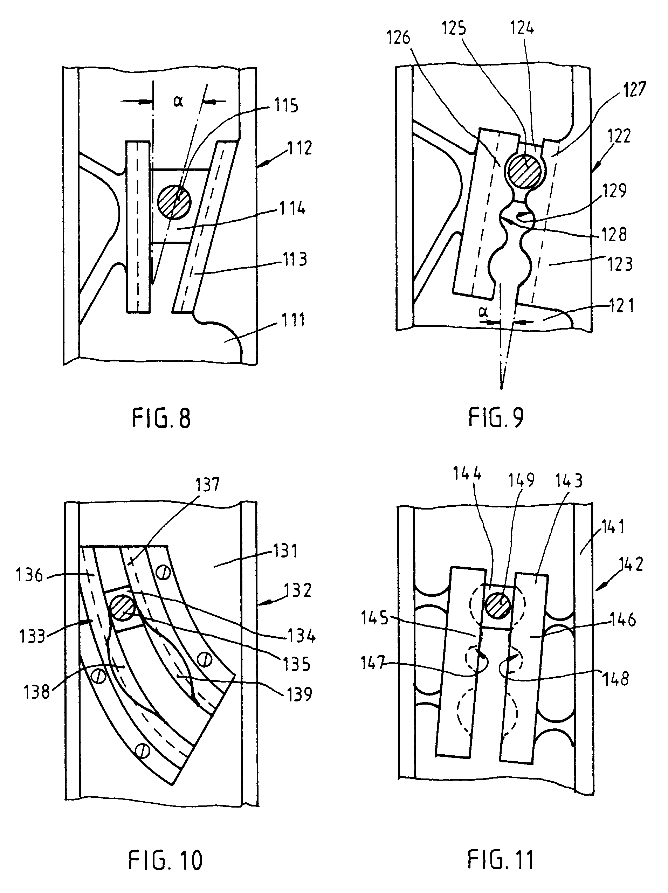

In Fig. 8 ist die im Rahmen 111 der Rückenlehne 112 austauschbar angeordnete, T-förmig gestaltete Gleitführung 113 unter einem Winkel α von 15° zur Längsachse der Rückenlehne 112 angestellt und sich nach unten verjüngend ausgebildet. Der Gleitstein 114 ist dieser Keilform angepaßt. Die Gleitführung 113 ist in den im Spritzgießverfahren aus Kunststoff hergestellten Rahmen 111 integriert. Der Verbindungsbolzen ist mit 115 bezeichnet.

In Fig. 9 ist die im Rahmen 121 der Rückenlehne 122 angeordnete Gleitführung 123 unter einem Winkel von 10° zur Längsachse der Rückenlehne 122 geneigt. In der T-förmigen Gleitführung 123 ist ein Gleitstein 124 geführt, in welchen ein Verbindungsbolzen 125 eingreift. In diesem Falle weisen die vorspringenden, den Gleitstein 124 sichernden Schenkel 126, 127 Konturierungen 128, 129 auf, welche mit dem Verbindungsbolzen 125 zusammenwirken.

In Fig. 10 ist die im Rahmen 131 der Rückenlehne 132 angeordnete Gleitführung 133 als metallisches, austauschbares Montageteil ausgebildet. Sie besitzt T-Form und ist kreisbogenförmig gekrümmt. In ihr ist ein entsprechend gestalteter Gleitstein 134 geführt, in welchen der Verbindungsbolzen 135 eingreift. Die den Gleitstein 134 abdeckenden Schenkel 136, 137 weisen verstärkende Profilierungen 138, 139 auf.

In Fig. 11 ist die im Rahmen 141 der Rückenlehne 142 angeordnete Gleitführung 143 so ausgebildet, daß die rechts und links dem Gleitstein 144 zugeordneten Gleitflächen 145, 146 Konturierungen 147, 148 aufweisen.

## Patentansprüche

1. Fahrzeugsitz, bestehend aus einem Sitzunterteil (1; 71) und einer Rückenlehne (2; 72, 112, 122, 132, 142), welche miteinander mittels Gelenkbeschlägen (3; 73) verbunden sind, wobei die Gelenkbeschläge (3; 73) Laschen (4; 5, 42, 47, 51, 55, 62, 74; 75) aufweisen und jede Lasche (4; 5, 42, 47, 51, 55, 62, 74; 75) mit zwei in Längsausdehnung der Lasche (4; 5, 42, 47, 51, 55, 62, 74; 75) mit Abstand angeordneten Durchstecklöchern (13; 14, 24; 29, 41, 45, 52, 56, 61, 83, 84, 94; 98) versehen ist, durch welche Verbindungsbolzen (9; 10, 22; 26, 44, 49, 54, 58, 64, 79; 80, 92, 96; 115, 125, 135, 149) hindurchgeführt und im Sitzunterteil (1, 71) bzw. in der Rückenlehne (2, 72, 112, 122, 132, 142) gehalten sind, dadurch gekennzeichnet, daß zwischen mindestens einer Lasche (4; 5, 42, 47, 51, 55, 62, 74; 75) jedes Gelenkbeschlages (3, 73) und dem Sitzunterteil (1, 71) bzw. der Rückenlehne (2, 72, 112, 122, 132, 142) mittels der Verbindungsbolzen (9; 10, 22; 26, 44, 49, 54, 58, 64, 79; 80, 92, 96; 115, 125, 135, 149) eine Fixpunktverbindung (20, 90) und eine Gleitverbindung (21, 91) bestehen.

2. Fahrzeugsitz nach Anspruch 1, dadurch gekennzeichnet, daß die Gleitverbindung (21) aus einem als Langloch (29, 41, 45, 52, 56, 61) ausgebildeten Durchsteckloch besteht und daß beide Verbindungsbolzen (9; 10, 22; 26, 44, 49, 54, 58, 64) fest im Sitzunterteil (1) bzw. in der Rückenlehne (2) gehalten sind.

3. Fahrzeugsitz nach Anspruch 1, dadurch gekennzeichnet, daß die Gleitverbindung (91) aus einer im Sitzunterteil (71) bzw. in der Rückenlehne (72, 112, 122, 132, 142) angeordneten Gleitführung (99, 113, 123, 133, 143) für einen mit dem Verbindungsbolzen (96, 115, 125, 135, 149) verbundenen Gleitstein (111, 114, 124, 134, 144) besteht.

4. Fahrzeugsitz nach Anspruch 3, dadurch gekennzeichnet, daß der Verbindungsbolzen einen als Gleitstein ausgebildeten Kopf besitzt.

5. Fahrzeugsitz nach einem der Ansprüche 2 bis 4, dadurch gekennzeichnet, daß das Langloch (29, 41, 45, 52, 56, 61) bzw. die Gleitführung (99, 113, 123, 133, 143) eine Konturierung (30, 41, 45, 52, 56, 61, 128, 129, 138, 139, 147; 148) aufweist.

6. Fahrzeugsitz nach einem der Ansprüche 2 bis 5, dadurch gekennzeichnet, daß die Lasche (5, 42, 47, 51, 55, 62) im Bereich des Langloches (29, 41, 45, 52, 56, 61) eine Profilierung (32, 43, 48) aufweist.

7. Fahrzeugsitz nach einem der Ansprüche 2 bis 6, dadurch gekenzeichnet, daß in dem Langloch (29) ein auf dem Verbindungsbolzen (26) angeordnetes Aufweitstück (31) geführt ist.

8. Fahrzeugsitz nach einem der Ansprüche 3 bis 5, dadurch gekennzeichnet, daß der Gleitstein (114) als Aufweitstück ausgebildet ist.

9. Fahrzeugsitz nach einem der Ansprüche 1 bis 8, dadurch gekennzeichnet, daß den Befestigungsstellen der Verbindungsbolzen (22; 26, 44, 49, 54, 58, 64) im Sitzunterteil (1, 71) bzw. in der Rückenlehne (2) eine Entlastungsplatte (33) zugeordnet ist.

10. Fahrzeugsitz nach einem der Ansprüche 2, 5, 6, 7 oder 9, dadurch gekennzeichnet, daß im Langloch (61) ein hartelastischer Puffer (63) angeordnet ist.

## Claims

1. A vehicle seat comprising a lower seat part (1, 71) and a backrest (2, 72, 112, 122, 132, 142), which are connected with one another by means of articulated joint fittings (3, 73), the articulated joint fittings (3, 73) comprising brackets (4; 5, 42, 47, 51, 55, 62, 74; 75) and each bracket (4; 5, 42, 47, 51, 55, 62, 74; 75) being provided with two through holes (13; 14, 24; 29, 41, 45, 52, 56, 61, 83, 84, 94; 98) arranged spaced apart in the longitudinal extension of the bracket (4; 5, 42, 47, 51, 55, 62, 74; 75), through which holes connecting bolts (9; 10, 22; 26, 44, 49, 54, 58, 64, 79; 80, 92, 96; 115, 125, 135, 149) are guided and held in the lower seat part (1, 71) or in the backrest (2, 72, 112, 122, 132, 142), characterised in that a fixed point connection (20, 90) and a sliding connection (21, 91) is formed by means of the connecting bolts (9; 10, 22; 26, 44, 49, 54, 58, 64, 79; 80, 92, 96; 115, 125, 135, 149) between at least one bracket (4; 5, 42, 47, 51, 55, 62, 74; 75) of each articulated joint fitting (3, 73) and the lower seat part (1, 71) or backrest (2, 72, 112, 122, 132, 142).

2. A vehicle seat according to claim 1, characterised in that the sliding connection (21) is formed by a through hole designed as a slot (29, 41, 45, 52, 56, 61) and both connecting bolts (9; 10, 22; 26, 44, 49, 54, 58, 64) are securely held in the lower seat part (1) or in the backrest (2).

3. A vehicle seat according to claim 1, characterised in that the sliding connection (91) is formed by a sliding guide (99, 113, 123, 133, 143) arranged in the lower seat part (71) or in the backrest (72, 112, 122, 132, 142) for a sliding member (111, 114, 124, 134, 144) connected with the connecting bolt (96, 115, 125, 135, 149).

4. A vehicle seat according to claim 3, characterised in that the connecting bolt comprises a head designed as a sliding member.

5. A vehicle seat according to one of claims 2 to 4, characterised in that the slot (29, 41, 45, 52, 56, 61) or sliding guide (99, 113, 123, 133, 143) comprises a contour (30, 41, 45, 52, 56, 61, 128, 129, 138, 139, 147; 148).

6. A vehicle seat according to one of claims 2 to 5, characterised in that in the region of the slot (29, 41, 45, 52, 56, 61), the bracket (5, 42, 47, 51, 55, 62) comprises a profiling (32, 43, 48).

7. A vehicle seat according to one of claims 2 to 6, characterised in that a flaring element (31) arranged on the connecting bolt (26) is guided in the slot (29).

8. A vehicle seat according to one of claims 3 to 5, characterised in that the sliding member (114) is designed as a flaring element.

9. A vehicle seat according to one of claims 1 to 8, characterised in that a relief plate (33) is associated with the securing sites of the connecting bolts (22; 26, 44, 49, 54, 58, 64,) in the lower seat part (1, 71) or in the backrest (2).

10. A vehicle seat according to one of claims 2,5,6,7 or 9, characterised in that a hard-elastic buffer (63) is arranged in the slot (61).

## Revendications

1. Siège de véhicule constitué d'une partie inférieure de siège (1; 71) et d'un dossier (2; 72, 112, 122, 132, 142) qui sont reliés l'un à l'autre au moyen de ferrures d'articulation (3; 73), les ferrures d'articulation (3; 73) présentant des éclisses (4; 5, 42, 47, 51, 55, 62, 74; 75) et chaque éclisse (4; 5, 42, 47, 51, 55, 62, 74; 75) étant munie de deux trous traversants (13; 14, 24; 29, 41, 45, 52, 56, 61, 83, 84, 94; 98) qui sont disposés, à une certaine distance l'un de l'autre, dans l'extension longitudinale de l'éclisse (4; 5, 42, 47, 51, 55, 62, 74; 75) dans lesquels passent des tiges de liaison (9; 10, 22; 26, 44, 49, 54, 58, 64, 79; 80, 92, 96; 115, 125, 135, 149) qui sont maintenues dans la partie inférieure du siège (1, 71) ou dans le dossier (2, 72, 112, 122, 132, 142), caractérisé par le fait qu'entre au moins une éclisse (4; 5, 42, 47, 51, 55, 62, 74; 75) de chaque ferrure d'articulation (3, 73) et la partie inférieure de siège (1, 71) ou le dossier (2, 72, 112, 122, 132, 142) existent, au moyen des tiges de liaison (9; 10, 22; 26, 44, 49, 54, 58, 64, 79; 80, 92, 96; 115, 125, 135, 149), une liaison à point fixe (20, 90) et une liaison coulissante (21, 91).

2. Siège de véhicule selon la revendication 1, caractérisé par le fait que la liaison coulissante (21) est constituée d'un trou traversant en forme de lumière (29, 41, 45, 52, 56, 61) et que les deux tiges de liaison (9; 10, 22; 26, 44, 49, 54, 58, 64) sont tenues, fixes, dans la partie inférieure de siège (1) ou dans le dossier (2).

3. Siège de véhicule selon la revendication 1, caractérisé par le fait que la liaison coulissante (91) est constituée d'un guidage à coulisse (99, 113, 123, 133, 143), disposé dans la partie inférieure de siège (71) ou dans le dossier (72, 112, 122, 132, 142), pour un coulisseau (111, 114, 124, 134, 144) lié à la tige de liaison (96, 115, 125, 135, 149).

4. Siège de véhicule selon la revendication 3, caractérisé par le fait que la tige de liaison possède une tête formant coulisseau.

5. Siège de véhicule selon l'une des revendications 2 à 4, caractérisé par le fait que la lumière (29, 41, 45, 52, 56, 61) ou le guidage à coulisse (99, 113, 123, 133, 143) présente un bord contourné (30, 41, 45, 52, 56, 61, 128, 129, 138, 139, 147; 148).

6. Siège de véhicule selon l'une des revendications 2 à 5, caractérisé par le fait que l'éclisse (5, 42, 47, 51, 55, 62) présente un profilage (32, 43, 48) dans la zone de la lumière (29, 41, 45, 52, 56, 61).

7. Siège de véhicule selon l'une des revendications 2 à 6, caractérisé par le fait que dans la lumière (29) est guidée une pièce (31) qui va en s'élargissant et qui est disposée sur la tige de liaison (26).

8. Siège de véhicule selon l'une des revendications 3 à 5, caractérisé par le fait que le coulisseau (114) a la forme d'une pièce qui va en s'élargissant.

9. Siège de véhicule selon l'une des revendications 1 à 8, caractérisé par le fait qu'aux emplacements de fixation des tiges de liaison (22; 26, 44, 49, 54, 58, 64) dans la partie inférieure de siège (1, 71) ou dans le dossier (2) correspond une plaque de décharge (33).

10. Siège de véhicule selon l'une des revendications 2, 5, 6, 7 ou 9, caractérisé par le fait que dans la lumière (61) est disposé un tampon (63) à élasticité dure.
